# EUROPÄISCHE PATENTANMELDUNG

(11) **EP 4 037 065 A1**
(43) Veröffentlichungstag der Anmeldung: **03.08.2022**
(21) Anmeldenummer: 22152404.4
(22) Anmeldetag: 20.01.2022
(51) Int. Cl.: H01M 10/613, H01M 10/6556, H01M 10/6567, H01M 50/209

(54) **KANAL ZUM KÜHLEN MINDESTENS EINER BATTERIEZELLE UND VERFAHREN ZUM AUSBILDEN EINES KANALS**

(30) Priorität: 02.02.2021 DE 102021102359
(71) Anmelder: Lisa Dräxlmaier GmbH, 84137 Vilsbiburg (DE)
(72) Erfinder: HAHN, Alexander, 91341 Röttenbach (DE); STECKEL, Michael, 84137 Vilsbiburg (DE); FALTERMEIER, Peter, 84028 Landshut (DE); SEIDL, Stefan, 84028 Landshut (DE)

(57) **Zusammenfassung**

Die Erfindung betrifft einen Kanal 230, 250 zum Kühlen mindestens einer Batteriezelle 135, 155, 175 umfassend einen ersten Gehäuserahmen 133 und einen zweiten Gehäuserahmen 153, 173, wobei der erste Gehäuserahmen 133 mit dem zweiten Gehäuserahmen 153, 173 verbunden ist, und zwischen dem ersten Gehäuserahmen 133 und dem zweiten Gehäuserahmen 153, 173 durch Form und Materialeigenschaften des ersten Gehäuserahmens 133 und des zweiten Gehäuserahmens 153, 157 ein teilweise fluiddichter Bereich ausgebildet ist und der teilweise fluiddichte Bereich den Kanal 230, 250 bildet, und der Kanal 230, 250 eingerichtet ist, ein Kühlmittel durch den Kanal 230, 250 strömen zu lassen.

## Beschreibung

### Technisches Gebiet

Die vorliegende Erfindung betrifft einen Kanal zum Kühlen mindestens einer Batteriezelle. Des Weiteren betrifft die Erfindung ein Verfahren zum Ausbilden eines Kühlkanals.

### Stand der Technik

Elektrisch betriebene Fahrzeuge werden mit Elektromotoren angetrieben. Die Energie, welche für den Antrieb des Elektromotors benötigt wird, wird aus einer Batterie entnommen. Die Batterie besteht aus mehreren elektrisch miteinander verschalteten Batteriemodulen. Jedes der Batteriemodule enthält Batteriezellen. Bei der Entnahme der Energie aus der Batterie entsteht aufgrund der elektrischen Widerstände und den damit verbundenen Leistungsverlusten, beispielsweise einem Innenwiderstand der Batteriezelle oder Kontaktwiderstände, eine Verlustleistung. Die Verlustleistung wird in Wärme umgewandelt und führt zu einer Erwärmung aller Batteriezellen in der Batterie. Um ein Überhitzen der Batteriezellen oder sogar eine Zerstörung der Batterie durch die Wärme bei einer hohen Verlustleistung zu vermeiden, muss die Wärme abgeführt werden. Zur Kühlung der Batteriezellen kann ein elektrisch-nichtleitendes Kühlmittel verwendet werden. Das Kühlmittel, beispielsweise Transformatorenöl, zirkuliert innerhalb des Batteriemoduls und fließt an einer erhitzten Batteriezelle vorbei, nimmt dessen Wärme auf und führt die Wärme von der erhitzten Batteriezelle ab. Dabei muss viel Kühlmittel verwendet werden, wobei jedoch Kühlmittel sehr teuer und schwer sind, wodurch der Preis und das Gewicht des Batteriemoduls beeinflusst wird.

Die DE 10 2018 117 601 A1 beschreibt eine Batterie mit zumindest einem Batteriemodul, welches mehrere elektrisch leitend miteinander verbundene zylinderförmige Batteriezellen aufweist und eine Temperiereinrichtung zum Temperieren der Batteriezellen mit einem einen Fluidraum aufweisenden Behälter, in welchen die Batteriezellen teilweise hineinragen und der einen Zufluss und einen Abfluss für eine Flüssigkeit eines Flüssigkeitskreislaufs aufweist. Die Flüssigkeit ist eine elektrisch nicht leitende Flüssigkeit und der Behälter weist einen Zellhalter mit mehreren Öffnungen auf, durch welche jeweilige Stirnseiten der Batteriezellen des zumindest einen Batteriemoduls in den Fluidraum des Behälters hineinragen und welche jeweilige Mantelflächen der Batteriezellen flüssigkeitsdicht umschließen. Der Zellhalter weist zumindest noch eine weitere Öffnung auf, durch welche ein Kontaktelement in den Fluidraum des Behälters hineinragt und welche eine Mantelfläche des Kontaktelements flüssigkeitsdicht umschließt. Eine im Fluidraum des Behälters angeordnete Verbindungseinrichtung verbindet elektrisch die jeweilige Pole der in den Fluidraum des Behälter hineinragenden Stirnseiten der Batteriezellen mit dem in den Behälter hineinragenden Kontaktelement.

### Beschreibung der Erfindung

Eine Aufgabe der Erfindung ist es daher, unter Einsatz konstruktiv möglichst einfacher Mittel eine einfache Kühlung von Batteriezellen bereitzustellen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Ein Aspekt der Erfindung betrifft einen Kanal zum Kühlen mindestens einer Batteriezelle umfassend einen ersten Gehäuserahmen und einen zweiten Gehäuserahmen, wobei der erste Gehäuserahmen mit dem zweiten Gehäuserahmen verbunden ist, und zwischen dem ersten Gehäuserahmen und dem zweiten Gehäuserahmen durch Form und Materialeigenschaften des ersten Gehäuserahmens und des zweiten Gehäuserahmens ein teilweise fluiddichter Bereich ausgebildet ist und der teilweise fluiddichte Bereich den Kanal bildet, und der Kanal eingerichtet ist, ein Kühlmittel durch den Kanal strömen zu lassen. Durch die erfindungsgemäße Bereitstellung des Kanals zum Kühlen beim Verbinden des ersten Gehäuserahmens mit den zweiten Gehäuserahmens wird eine einfache und effektive Möglichkeit geschaffen, eine effektive Kühlung der Batteriezelle bereitzustellen, da der Kühlmittelfluss, und damit der Wärmefluss, innerhalb des so geschaffenen Kanals zum Kühlen von der Batteriezelle wegeführt und damit die Batteriezelle gekühlt wird. Eine Batteriezelle kann in einem Batteriemodul eingesetzt werden. Ein oder mehrere Batteriemodule können zu einer Batterie oder einem Energiespeicher verschalten werden. Bei einer Verschaltung von mehreren Batteriemodulen werden die Batteriezellen aus einem ersten Batteriemodul mit Batteriezellen aus einem weiteren Batteriemodul miteinander elektrisch kontaktiert und verbunden. Aus einer Batterie oder einem Energiespeicher kann die Energie für einen Antrieb eines Elektromotors entnommen worden, wodurch beispielsweise ein elektrisch betriebenes Fahrzeug angetrieben werden kann.

Der erste Gehäuserahmen kann ein Teil eines Gehäuses eines ersten Batteriemoduls sein. Der zweite Gehäuserahmen kann ein Teil eines Gehäuses eines zweiten Batteriemoduls sein. Der erste Gehäuserahmen und der zweite Gehäuserahmen sind miteinander verbunden. Aufgrund von Form und Materialeigenschaften des ersten Gehäuserahmens und des zweiten Gehäuserahmens ist ein fluiddichter Bereich zwischen dem ersten Gehäuserahmen und dem zweiten Gehäuserahmen ausgebildet. Beispielsweise können der erste Gehäuserahmen und der zweite Gehäuserahmen mittels Spritzgießverfahren hergestellt werden. Es kann in einem Verbindungsbereich des ersten Gehäuserahmens mit dem zweiten Gehäuserahmens eine Dichtung, beispielsweise eine Dichtlippe, angeordnet werden, sodass die Fluiddichtigkeit sichergestellt ist. Der erste Gehäuserahmen kann in dem Verbindungsbereich Rastnasen umfassen. Der zweite Gehäuserahmen kann zu den Rastnasen korrespondierende Rastlaschen umfassen, sodass bei einem Verbinden die Rastlaschen des zweiten Gehäuserahmens in die Rastnasen des ersten Gehäuserahmens einrasten. Der erste Gehäuserahmen und der zweite Gehäuserahmen können bei dem Verbinden ineinander gesteckt werden.

Der Kanal ist dazu eingerichtet, ein Kühlmittel in dem Kanal strömen zu lassen. Das Kühlmittel ist ein elektrisch nichtleitendes Kühlmittel, wie beispielsweise ein Transformatorenöl.

Um eine elektrische Kontaktierung zwischen Batteriezellen herzustellen, umfassen die Batteriezellen einen Pluspol und einen Minuspol. Die Batteriezelle kann in dem ersten Gehäuserahmen angeordnet werden, sodass ein Pluspol oder ein Minuspol der Batteriezelle in dem Kanal anordenbar ist. Es kann ebenfalls eine weitere Batteriezelle in dem zweiten Gehäuserahmen angeordnet werden, sodass der Pluspol oder der Minuspol der weiteren Batteriezelle ebenfalls in dem Kanal anordenbar ist. Das Kühlmittel kann die Batteriezellen zumindest teilweise umströmen, nimmt dadurch die Wärme der Batteriezellen auf und kühlt die Batteriezellen. Das erwärmte Kühlmittel kann aus dem fluiddichten Bereich herausströmen und beispielsweise mittels eines Wärmetauschers wieder heruntergekühlt werden. Der teilweise fluiddichte Bereich kann an ein Kühlmittelreservoir angeschlossen werden.

In einer Ausführungsform schließt der erste Gehäuserahmen einen Innenraum ein. In dem Innenraum ist eine Batteriezelle angeordnet und die Batteriezelle ragt zumindest teilweise in den fluiddichten Bereich.

In einer weiteren Ausführungsform umfasst der erste Gehäuserahmen einen Batteriezellhalter. Der Batteriezellhalter ist eingerichtet, die Batteriezelle in dem ersten Gehäuserahmen zu halten. Der Batteriezellhalter kann aus einem geschlossenporigen Material bestehen. Beispielsweise kann der Batteriezellhalter aus einem geschäumten Material bestehen. Der Batteriezelle kann in dem Batteriezellhalter eingesetzt werden und der Batteriezellhalter hält die Batteriezelle in dem ersten Gehäuserahmen und positioniert die Batteriezelle exakt in dem ersten Gehäuserahmen. Dadurch können Positionstoleranzen der Batteriezelle in dem ersten Gehäuserahmen vermieden werden. Der Batteriezellhalter kann in dem Innenraum des ersten Gehäuserahmens angeordnet sein. Der erste Gehäuserahmen kann ein Batteriemodulgehäuse sein. Beispielsweise kann der Batteriezellhalter um die Batteriezelle umspritzt werden, wodurch eine Dichtigkeit gewährleistet wird, sodass das Kühlmittel nicht in einen Bereich zwischen der Batteriezelle und dem Batteriezellhalter eindringen kann. Der Batteriezellhalter verdrängt das Kühlmittel dadurch und das Kühlmittel strömt dadurch ausschließlich in dem Kanal.

In einer weiteren Ausführungsform ragt eine Stirnseite der Batteriezelle in den fluiddichten Bereich des ersten Gehäuserahmens. Der zweite Gehäuserahmen umfasst eine weitere Batteriezelle, welche stirnseitig zu der Batteriezelle angeordnet ist und das Kühlmittel die Stirnseite der Batteriezelle und eine Stirnseite der weiteren Batteriezelle direkt umströmt. Bei der Batteriezelle und der weiteren Batteriezelle kann es sich um Rundzellen handeln. Bei Rundzellen sind die Pluspole und Minuspole jeweils an den Stirnseiten der Batteriezellen angeordnet. Die Stirnseite der Batteriezelle und die Stirnseite der weiteren Batteriezelle ragen in den fluiddichten Bereich, sodass die Stirnseiten der Batteriezelle und der weiteren Batteriezelle durch das Umströmen des Kühlmittels gekühlt werden, weil das Kühlmittel die Wärme aufnimmt und von der Batteriezelle und der weiteren Batteriezelle in dem Kanal zum Kühlen wegführt. Das Kühlmittel nimmt dadurch die Wärme der Batteriezelle und der weiteren Batteriezelle auf. Beispielweise können die Stirnseite der Batteriezelle und die Stirnseite der weiteren Batteriezelle von dem Batteriezellhalter freiliegen, sodass der direkte Kontakt des Kühlmittels mit den Stirnseiten ermöglicht wird, wodurch die Abführung der Wärme und damit die Kühlleistung erhöht wird, da die Stirnseiten in direktem Kontakt mit dem Kühlmittel stehen. Die Batteriezelle und die weitere Batteriezelle können miteinander über die Stirnseiten elektrisch kontaktiert sein.

In einer weiteren Ausführungsform ist auf der Stirnseite der Batteriezelle ein Kontaktelement aufgeschweißt, welches eingerichtet ist, einen elektrischen Kontakt zwischen der Batteriezelle und der weiteren Batteriezelle herzustellen, wobei das Kühlmittel das Kontaktelement direkt umströmt. Beispielsweise kann die Stirnseite der Batteriezelle ein Minuspol sein. Auf dem Minuspol kann eine Kontaktkrone als Kontaktelement aufgeschweißt sein. Die Kontaktkrone umfasst Kontaktfahnen, welche bei einer elektrischen Kontaktierung den Zellmantel der weiteren Batteriezelle umgreifen. Durch diese Maßnahme werden nicht nur die Stirnseiten der Batteriezellen aufgrund des vorbeiströmenden Kühlmittels gekühlt, sondern auch das Kontaktelement, das aufgrund des direkten Kontakts mit einer der Stirnseiten der Batteriezellen, und des damit einhergehenden Wärmeaustausches, ebenfalls stark aufgeheizt sein kann und somit auch gekühlt werden muss.

In einer weiteren Ausführungsform ist in dem Innenraum des ersten Gehäuserahmens eine Mehrzahl von Batteriezellen anordenbar. Eine gezielte Dimensionierung des teilweise fluiddichten Bereichs zwischen dem ersten Gehäuserahmen und dem zweiten Gehäuserahmen als Kanal auf der Basis der Anzahl der Batteriezellen und der erwarteten maximalen Verlustleistung gewährleistet eine geringe Temperaturdifferenz zwischen der Mehrzahl von Batteriezellen. Die Mehrzahl von Batteriezellen kann mit einer Mehrzahl von Batteriezellen, welche in dem zweiten Gehäuserahmen anordenbar sind, elektrisch verschalten werden. Das Kühlmittel kann mittels einer Pumpe in den Kanal eingepumpt werden.

Je nach Dimensionierung des fluiddichten Bereichs wird eine höherer Druck der Pumpe benötigt, um eine optimale Fließgeschwindigkeit des Kühlmittels zu erreichen. Je größer die Dimensionierung des fluiddichten Bereichs ist, desto mehr Fläche kann an der Batteriezelle und gegebenenfalls des Kontaktelements gekühlt werden. Vorteil dieser Massnahme ist, eine raschere Alterung der Batteriezellen zu vermeiden und eine gleichmäßige Stromverteilung zwischen den Batteriezellen zu erhalten, sodass die Batteriezellen untereinander nur eine geringe Temperaturdifferenz aufweisen. Beispielsweise sollte bei parallel geschalteten Batteriezellen eine Temperaturdifferenz von 5 Kelvin nicht überschritten werden. Die Fließgeschwindigkeit des Kühlmittels und damit die Kühlleistung durch das Kühlmittel hängt somit unter anderem von dem Druck der Pumpe und der Dimensionierung des fluiddichten Bereichs ab.

In einer weiteren Ausführungsform umfasst der erste Gehäuserahmen einen Kühlmittelverteiler, welcher eingerichtet ist, das Kühlmittel gleichmäßig verteilt in den Kanal einströmen zu lassen. Der Kühlmittelverteiler kann beispielsweise ein Manifold sein. Der Kühlmittelverteiler kann einen Hauptkühlmitteleinlass umfassen, welcher eine Vielzahl von Batteriemodulen mit dem Kühlmittel versorgt. An jedem der Batteriemodule können Öffnungen vorgesehen sein, welche ein Einströmen des Kühlmittels von dem Hauptkühlmitteleinlass in das jeweilige Batteriemodul ermöglichen. Ebenfalls kann ein weiterer Kühlmittelverteiler angeordnet sein, welcher über weitere Öffnungen an den jeweiligen Batteriemodulen ein Ausströmen des Kühlmittels in einen Hauptkühlmittelauslass erlaubt.

In einer weiteren Ausführungsform umfasst der Kanal einen Kühlmitteleinlass, welcher eingerichtet ist, das Kühlmittel in den Kanal einströmen zu lassen und der Kanal umfasst einen Kühlmittelauslass, welcher eingerichtet ist, das Kühlmittel aus dem Kanal ausströmen zu lassen. Der Kühlmitteleinlass und der Kühlmittelauslass können Anschlussvorrichtungen für Schläuche sein. Die Schläuche können an das Kühlmittelreservoir angeschlossen sein. Der Kühlmitteleinlass und der Kühlmittelauslass können auch Öffnungen sein. Die Öffnungen können mit dem Kühlmittelverteiler verbunden sein.

Ein weiterer Aspekt der Erfindung betrifft ein Verfahren zum Ausbilden eines Kanals mit einem Bereitstellen eines ersten Gehäuserahmens und einem Bereitstellen eines zweiten Gehäuserahmens. Anschließend erfolgt ein Verbinden des ersten Gehäuserahmens mit dem zweiten Gehäuserahmen wobei zwischen dem ersten Gehäuserahmen und dem zweiten Gehäuserahmen durch die Form und Materialeigenschaften des ersten Gehäuserahmens und des zweiten Gehäuserahmens ein teilweise fluiddichter Bereich ausgebildet wird und den Kanal bildet.

In einer Ausführungsform umfasst der erste Gehäuserahmen Rastlaschen und der zweite Gehäuserahmen umfasst Rastnasen. Über die Rastlaschen und Rastnasen können der erste Gehäuserahmen und der zweite Gehäuserahmen bei dem Verbinden miteinander verrasten.

In weiteren Ausführungsform können der erste Gehäuserahmen und der zweite Gehäuserahmen zusammengesteckt werden. Um die Dichtigkeit in dem fluiddichten Bereich zu gewährleisten, kann ein Dichtelement, beispielsweise ein Dichtring, an einer Verbindungsstelle des ersten Gehäuserahmens mit dem zweiten Gehäuserahmen angebracht werden.

Das Verbinden des ersten Gehäuserahmens mit dem zweiten Gehäuserahmen kann innerhalb eines Fertigungsprozesses automatisiert erfolgen.

In einer Ausführungsform umfasst das Verbinden des ersten Gehäuserahmens mit dem zweiten Gehäuserahmen ein Anschließen eines Kühlmitteleinlasses und eines Kühlmittelauslasses an den Kanal.

Dadurch, dass der Kanal erst durch das Verbinden beider Gehäuserahmen entsteht, ist eine hohe Dichtigkeit des Kanals gewährleistet, sodass kein Kühlmittel aus dem Kanal ungewollt austreten kann. Dadurch kann die Menge des Kühlmittels auf den fluiddichten Bereich beschränkt werden und muss nicht, wie in bekannten Batteriemodulen den gesamten Innenraum der Batteriemodule ausfüllen. Es können Batteriemodule, in welchem der Kanal integriert ist, gewichtsreduzierter und kostengünstiger hergestellt werden.

### Kurze Figurenbeschreibung

Nachfolgend werden vorteilhafte Ausführungsbeispiele der Erfindung unter Bezugnahme auf die begleitenden Figuren erläutert. Es zeigen:
- Figur 1: einen Kanal zum Kühlen mindestens einer Batteriezelle gemäß einem ersten Ausführungsbeispiel in einer Schnittdarstellung und
- Figur 2: den Kanal zum Kühlen der mindestens einen Batteriezelle gemäß einem zweiten Ausführungsbeispiel in einer Schnittdarstellung.

Die Figuren sind lediglich schematische Darstellungen und dienen nur der Erläuterung der Erfindung. Gleiche oder gleichwirkende Elemente sind durchgängig mit den gleichen Bezugszeichen versehen.

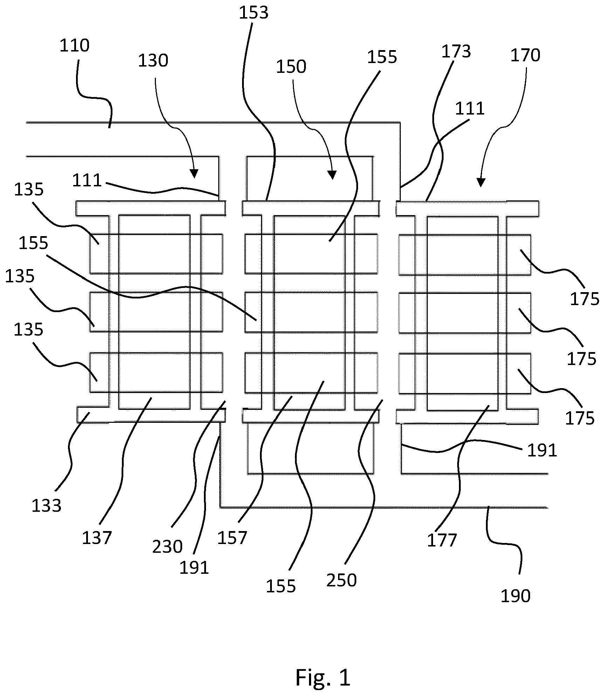

Die Fig. 1 zeigt einen Kanal zum Kühlen mindestens einer Batteriezelle gemäß einem ersten Ausführungsbeispiel in einer Schnittdarstellung. In Batteriemodulen 130, 150, 170 sind jeweils Rundzellen 135, 155, 175 als Batteriezellen eingesetzt. Durch die Rundzellen 135, 155, 175 wird die Energie, welche für einen Antrieb eines Elektrofahrzeugs benötigt wird, bereitgestellt. Durch das Bereitstellen der Energie erwärmen sich die Rundzellen 135, 155, 175.

Die Batteriemodule 130, 150, 170 umfassen jeweils ein Batteriemodulgehäuse 133, 153, 173. Die Rundzellen 135, 155, 175 werden von einem Batteriezellhalter 137, 157, 177 in dem Batteriemodulgehäuse 133, 153, 173 gehalten. Der Batteriezellhalter 137, 157, 177 sorgt gleichzeitig dafür, dass die Rundzellen 135, 155, 175 positionsgenau angeordnet sind und vermeidet Positionstoleranzen der Rundzellen 153, 155, 175 in dem Batteriemodul 130, 150, 170. Die Rundzellen 135, 155, 175 sind jeweils so eingesetzt, dass ihre Stirnseiten in einen Kanal 230, 250 ragen. Der Kanal 230, 250 wird erst durch das Verbinden der Batteriemodulgehäuse 133, 153, 173 hergestellt und bildet den fluiddichten Bereich. In dem Kanal 230, 250 wird ein Kühlmittel durchströmt. Das Kühlmittel umströmt dabei die Stirnseiten der Rundzellen 153, 155, 175 und nimmt die Wärme der Rundzellen 135, 155, 175 auf. Dadurch werden die Rundzellen 135, 155, 175 gekühlt. Der Kanal 230, 250 umfasst jeweils einen Kühlmitteleinlass 111 und einen Kühlmittelauslass 191 , welche als Schläuche ausgebildet sind. Die Kühlmitteleinlässe 111 und die Kühlmittelauslässe 191 sind jeweils an einen Kühlmittelverteiler 110, 190 angeschlossen. Über die Kühlmittelverteiler 110, 190 wird das Kühlmittel gleichmäßig verteilt in den Kanal 230 und in den Kanal 250 eingeströmt bzw. ausgeströmt. Das Einströmen des Kühlmittels erfolgt über eine Pumpe (nicht in Figur 1 dargestellt).

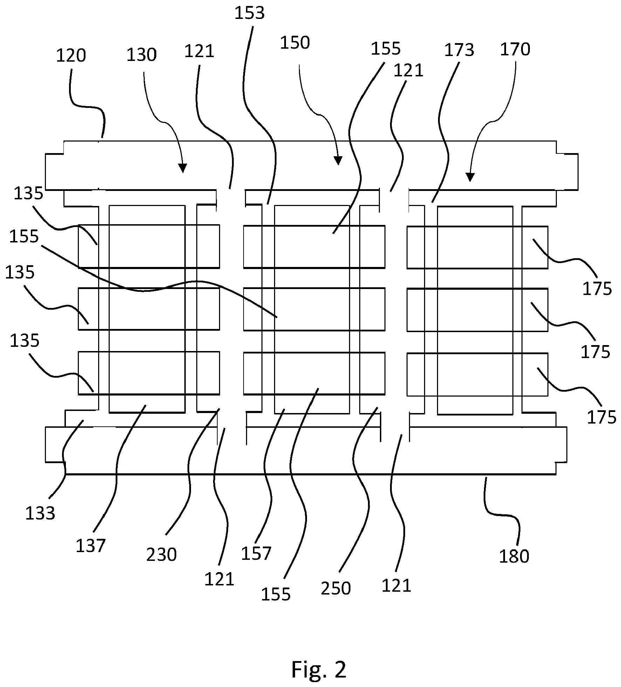

Die Fig. 2 zeigt den Kanal gemäß einem zweiten Ausführungsbeispiel in einer Schnittdarstellung. Gemäß dem zweiten Ausführungsbeispiel ist ein Kühlmittelverteiler 120, 180 bereits in den Batteriemodulen 130, 150, 170 integriert. Durch ein Verbinden der einzelnen Batteriemodulgehäuse 133, 153, 173 wird nicht nur der Kanal 230, 250 hergestellt, sondern auch der Kühlmittelverteiler 120, 180. Dadurch, dass der Kühlmittelverteiler 120, 180 bereits in den Batteriemodulen 130, 150, 170 integriert ist, entsteht eine erhöhte Dichtigkeit, sodass das Kühlmittel nicht aus dem Batteriemodulgehäuse 133, 153, 173 austreten kann. Beispielsweise kann das Batteriemodulgehäuse 133, 153, 173 mittels eines Spritzgießverfahrens einstückig hergestellt werden.

Der Kühlmittelverteiler 120 umfasst Öffnungen 121 zum Einströmen des Kühlmittels in den Kanal 230, 250. Der Kühlmittelverteiler 180 umfasst weitere Öffnungen 121 zum Ausströmen des Kühlmittels aus dem Kanal 230, 250. Das Kühlmittel wird in den Kühlmittelverteiler 120 gepumpt und gelangt über die Öffnungen 121 in den Kanal 230, 250. Innerhalb des Kanals 230, 250 umströmt das Kühlmittel die Stirnseiten des Rundzellen 135, 155, 175 und strömt über die weiteren Öffnungen 121 aus dem Kanal 230, 250 heraus in den Kühlmittelverteiler 180. Um ein gleichmäßig verteiltes Einströmen und Ausströmen des Kühlmittels zu erreichen, muss die Summe alles Querschnitte der Öffnungen 121 mindestens genauso groß sein wie der Querschnitt der jeweiligen Kühlmittelverteiler 120, 180.

### BEZUGSZEICHENLISTE

- 110, 120, 180, 190: Kühlmittelverteiler
- 111: Kühlmitteleinlass
- 121: Öffnung
- 130, 150, 170: Batteriemodul
- 133, 153, 173: Batteriemodulgehäuse
- 135, 155, 175: Batteriezelle
- 137, 157, 177: Batteriezellhalter
- 191: Kühlmittelauslass

## Patentansprüche

1. Kanal (230, 250) zum Kühlen mindestens einer Batteriezelle (135, 155, 175) umfassend
einen ersten Gehäuserahmen (133) und einen zweiten Gehäuserahmen (153, 173), wobei der erste Gehäuserahmen (133) mit dem zweiten Gehäuserahmen (153, 173) verbunden ist, und zwischen dem ersten Gehäuserahmen (133) und dem zweiten Gehäuserahmen (153, 173) durch Form und Materialeigenschaften des ersten Gehäuserahmens (133) und des zweiten Gehäuserahmens (153, 157) ein teilweise fluiddichter Bereich ausgebildet ist und der teilweise fluiddichte Bereich den Kanal (230, 250) bildet, und
der Kanal (230, 250) eingerichtet ist, ein Kühlmittel durch den Kanal (230, 250) strömen zu lassen.

2. Kanal (230, 250) nach Anspruch 1, wobei der erste Gehäuserahmen (133) einen Innenraum einschließt und in dem Innenraum eine Batteriezelle (135) angeordnet ist und die Batteriezelle (135) zumindest teilweise in den fluiddichten Bereich ragt.

3. Kanal (230, 250) nach einem der Ansprüche 1 oder 2, wobei der erste Gehäuserahmen (133) einen Batteriezellhalter (137, 157, 177) umfasst, welcher eingerichtet ist, die Batteriezelle (135) in dem ersten Gehäuserahmen (133) zu halten.

4. Kanal (230, 250) nach einem der Ansprüche 1 bis 3, wobei eine Stirnseite der Batteriezelle (135) in den fluiddichten Bereich des ersten Gehäuserahmens (133) ragt und der zweite Gehäuserahmen (153, 173) eine weitere Batteriezelle (155, 175) umfasst, welche stirnseitig zu der Batteriezelle (135) angeordnet ist und das Kühlmittel die Stirnseite der Batteriezelle (135) und eine Stirnseite der weiteren Batteriezelle (155, 175) direkt umströmt.

5. Kanal (230, 250) nach Anspruch 4, wobei auf der Stirnseite der Batteriezelle (135) ein Kontaktelement aufgeschweißt ist, welches eingerichtet ist, einen elektrischen Kontakt zwischen der Batteriezelle (135) und der weiteren Batteriezelle (155, 175) herzustellen und dabei das Kühlmittel das Kontaktelement direkt umströmt.

6. Kanal (230, 250) nach einem der vorhergehenden Ansprüche, wobei in dem Innenraum des ersten Gehäuserahmens (133) eine Mehrzahl von Batteriezellen (135, 155, 175) anordenbar ist und eine Dimensionierung des teilweise fluiddichten Bereichs zwischen dem ersten Gehäuserahmen (133) und dem zweiten Gehäuserahmen (153, 173) als Kanal eine geringe Temperaturdifferenz zwischen der Mehrzahl von Batteriezellen (135, 155, 175) gewährleistet.

7. Kanal (230, 250) nach einem der vorhergehenden Ansprüche, wobei der erste Gehäuserahmen (133) einen Kühlmittelverteiler (110, 120, 180, 190) umfasst, welcher eingerichtet ist, das Kühlmittel gleichmäßig verteilt in den Kanal (230, 250) einströmen zu lassen.

8. Kanal (230, 250) nach einem der vorhergehenden Ansprüche, wobei der Kanal (230, 250) einen Kühlmitteleinlass (111) umfasst, welcher eingerichtet ist, das Kühlmittel in den Kanal (230, 250) einströmen zu lassen und wobei der Kanal (230, 250) einen Kühlmittelauslass (191) umfasst, welcher eingerichtet ist, das Kühlmittel aus dem Kanal (230, 250) ausströmen zu lassen.

9. Verfahren zum Ausbilden eines Kanals (230, 250)
- Bereitstellen eines ersten Gehäuserahmens (133) nach einem der Ansprüche 1 bis 8
- Bereitstellen eines zweiten Gehäuserahmens (153, 173) nach einem der Ansprüche 1 bis 8
- Verbinden des ersten Gehäuserahmens (133) mit dem zweiten Gehäuserahmen (153, 173) wobei zwischen dem ersten Gehäuserahmen (133) und dem zweiten Gehäuserahmen (153, 173) durch die Form und Materialeigenschaften des ersten Gehäuserahmens (133) und des zweiten Gehäuserahmens (153, 173) ein teilweise fluiddichter Bereich ausgebildet wird und den Kanal (230, 250) bildet.

10. Verfahren nach Anspruch 9, wobei das Verbinden des ersten Gehäuserahmens (133) mit dem zweiten Gehäuserahmen (153, 173) ein Anschließen eines Kühlmitteleinlasses (111) und eines Kühlmittelauslasses (190) an den Kanal umfasst.
